# EUROPEAN PATENT APPLICATION

(11) **EP 4 386 738 A1**
(43) Date of publication of application: **19.06.2024**
(21) Application number: 23217122.3
(22) Date of filing: 15.12.2023
(51) Int. Cl.: G09G 5/38

(54) **DISPLAY SYSTEM, DISPLAY DEVICE AND DISPLAY METHOD**

(30) Priority: 16.12.2022 JP 2022201638
(71) Applicant: Funai Electric Co., Ltd., Daito, Osaka, 574-0013 (JP)
(72) Inventor: MATSUMOTO, Miyu, Daito-shi, Osaka, 574-0013 (JP)
(74) Representative: Global IP Europe Patentanwaltskanzlei

(57) **Abstract**

A display system is provided that comprises a display device and a control unit. The display device includes at least one light source and a display unit with a display screen on which a plurality of display elements are configured to be displayed using light irradiated from the at least one light source. The control unit is configured to display, among the display elements, a display element with high priority for a user in a high-luminance area of the display screen of the display unit and configured to display, among the display elements, a display element with low priority for the user in a low-luminance area of the display screen of the display unit.

## Description

### CROSS-REFERENCE TO RELATED APPLICATIONS

This application claims priority to Japanese Patent Application No. 2022-201638 filed in Japan on December 16, 2022.

### BACKGROUND

### Field of the Invention

This invention generally relates to a display system, a display device and a display method. More specifically, this invention relates to a display system, a display device and a display method, comprising a light source and a display that uses light irradiated from the light source to perform display.

### Background Information

Conventionally, a display device equipped with a light source and a display unit that uses light irradiated from the light source to perform display is known (see JP H10-239659 A (Patent Literature 1), for example).

The above Patent Literature 1 discloses a display device equipped with a backlight unit (a light source) having a plurality of light sources, a liquid crystal panel (a display unit), a memory unit and a control unit. In the display device as shown in the above Patent Literature 1, due to the separation distance between the backlight unit and the liquid crystal panel and the directivity of the light of the backlight unit, the display screen of the liquid crystal panel has uneven luminance between high-luminance areas and low-luminance areas. Therefore, in the display device of the above Patent Literature 1, the memory unit stores correction values for adjusting the luminance of the backlight in advance to equalize the luminance of the display screen of the liquid crystal panel. The control unit reads the correction values from the memory unit according to the display position at which the display data is displayed, according to the scanning position of the liquid crystal panel, and controls the emission luminance of the backlight having the plurality of the light sources based on the readout correction values to equalize the luminance of the display screen of the liquid crystal panel. As a result, uneven luminance of the display screen of the liquid crystal panel is suppressed. In other words, when scanning to the liquid crystal panel as an operation to display, the scanning position of the liquid crystal panel is detected, and the luminance of the display screen of the liquid crystal panel is equalized by independently controlling the luminance of the plurality of the light sources according to the correction values read from the memory unit according to the detected scanning position.

### SUMMARY

However, when adjusting the luminance of the backlight (the light source) with the plurality of the light sources to equalize the luminance of the display screen of the liquid crystal panel, as in the above Patent Literature 1, there is a limit to the largest intensity of the backlight's luminescence. Thus, it may be difficult to increase the luminance in the low-luminance areas on the liquid crystal panel (the display unit) to match the luminance in the high-luminance areas. In this case, uneven luminance can be suppressed by reducing the luminance of the high-luminance areas in the liquid crystal panel to match the luminance of the high-luminance areas with the luminance of the low-luminance areas, based on the correction values read from the memory unit according to the scanning position of the liquid crystal panel. As a result, uneven luminance is suppressed in the display elements shown on the display screen of the liquid crystal panel. However, the entire liquid crystal panel becomes dark, and not only the display elements with low priority for the user but also the display elements with high priority for the user are displayed dark. As a result, there is a problem in that the visibility of the display elements with high priority for the user is reduced.

One object of the present invention is to provide a display system, a display device and a display method that can suppress a decrease in visibility of a display element with high priority for a user even when a display screen of a display unit has uneven luminance.
(1) In view of the state of the known technology, a display system according to a first aspect of the present invention comprises a display device and a control unit. The display device includes at least one light source and a display unit with a display screen on which a plurality of display elements are configured to be displayed using light irradiated from the at least one light source. The control unit is configured to display, among the display elements, a display element with high priority for a user in a high-luminance area of the display screen of the display unit and configured to display, among the display elements, a display element with low priority for the user in a low-luminance area of the display screen of the display unit.
   With the display system according to the first aspect of the present invention, as described above, the control unit is configured to display, among the display elements, the display element with high priority for the user in the high-luminance area of the display screen of the display unit and configured to display, among the display elements, the display element with low priority for the user in the low-luminance area of the display screen of the display unit. With this configuration, even if the display unit has uneven luminance of the display screen, the display element with high priority for the user is displayed in the high-luminance area of the display screen. As a result, even when the display unit has uneven luminance, a decrease in visibility of the display element with high priority for the user can be suppressed.
(2) In accordance with a preferred embodiment according to the display system mentioned above, the at least one light source includes a plurality of light sources.
(3) In accordance with a preferred embodiment according to any one of the display systems mentioned above, the control unit is configured to display, among the display elements, the display element with high priority for the user in the high-luminance area of the display screen of the display unit and configured to display, among the display elements, the display element with low priority for the user in the low-luminance area of the display screen of the display unit in a state in which luminance of the display screen is not equalized. With this configuration, even when the plurality of the light sources are provided, the display element with high priority for the user can be arranged in the high-luminance area of the display screen and the display element with low priority for the user can be arranged in the low-luminance area of the display screen. As a result, even in a state in which the luminance of the display screen is not equalized due to the plurality of the light sources, the decrease in visibility of the display element with high priority for the user can be suppressed.
(4) In accordance with a preferred embodiment according to any one of the display systems mentioned above, the display system further comprises a terminal communicatively connected to the display device.
(5) In accordance with a preferred embodiment according to any one of the display systems mentioned above, the control unit includes a terminal control unit provided to the terminal, and a display device control unit provided to the display device.
(6) In accordance with a preferred embodiment according to any one of the display systems mentioned above, the terminal control unit is configured to determine display positions of the display elements on the display unit based on distribution of luminance values such that the display element with high priority is displayed in the high-luminance area of the display screen and the display element with low priority is displayed in the low-luminance area of the display screen. The display device control unit is configured to display the display elements on the display unit based on the display positions of the display elements determined by the terminal control unit. With this configuration, the terminal control unit determines the display positions of the display elements based on luminance distribution and the display device control unit displays the display elements on the display unit. Thus, the display element with high priority is automatically displayed in the high-luminance area of the display screen. As a result, the user's effort to display the display element with high priority in the high-luminance area of the display screen can be eliminated.
(7) In accordance with a preferred embodiment according to any one of the display systems mentioned above, the terminal is configured to accept a user's setting of priority. The terminal control unit is configured to determine the display positions of the display elements on the display unit based on the priority set by the user and the distribution of the luminance values such that the display element with high priority is displayed in the high-luminance area of the display screen and the display element with low priority is displayed in the low-luminance area of the display screen. With this configuration, the display positions of the display elements on the display unit are determined based on the priority set by the user, and the display elements are displayed on the display unit. Thus, the display elements can be displayed in the high-luminance area and the low-luminance area of the display screen according to the user's intended priority.
(8) In accordance with a preferred embodiment according to any one of the display systems mentioned above, the terminal control unit is configured to determine the display positions of the display elements on the display unit based on size of the display elements, in addition to the priority set by the user and the distribution of the luminance values, such that the display element with high priority is displayed in the high-luminance area of the display screen and the display element with low priority is displayed in the low-luminance area of the display screen. With this configuration, the display element with high priority is displayed in the high-luminance area of the display screen based also on the size of the display elements. Thus, it is possible to prevent the display element with high priority from being displayed so that it protrudes out from the high-luminance area. As a result, the decrease in visibility of the display element with high priority can be suppressed.
(9) In accordance with a preferred embodiment according to any one of the display systems mentioned above, the terminal control unit is configured to accept a user's setting of display positions of the display elements on the display unit. The display device control unit is configured to display the display elements on the display unit based on the display positions of the display elements accepted by the terminal control unit. With this configuration, it is possible to arrange the display elements on the display unit according to the user's preferences indicated by the user's terminal operation. As a result, the visibility of the display elements can be improved by manual arrangement by the user's terminal operation.
(10) In accordance with a preferred embodiment according to any one of the display systems mentioned above, the terminal control unit is configured to accept a user's selection of showing and hiding of each of the display elements, a user's setting of size of the display elements and the user's setting of the display positions of the display elements according to user's operation. The terminal control unit is configured to display the display elements on the display unit by overlapping the display elements with distribution of luminance values according to the user's setting of the display positions of the display elements. With this configuration, the user can perform the arrangement of the display elements, the selection of showing or hiding the display elements and the setting of the size of the display elements in a state in which the luminance distribution is overlapped with the display elements. As a result, it is possible to suppress the divergence between the state of the display elements arranged on the display unit as assumed by the user and the state of the display elements actually arranged on the display unit.
(11) In accordance with a preferred embodiment according to any one of the display systems mentioned above, the display device includes a memory unit configured to store at least one preset design in which display positions of the display elements are adjusted in advance. The control unit is configured to display the display elements on the display unit based on the at least one preset design such that the display element with high priority is displayed in the high-luminance area of the display screen and the display element with low priority is displayed in the low-luminance area of the display screen. With this configuration, the control unit displays the display elements on the display unit based on the at least one preset design stored in the memory unit in advance. Thus, unlike the case where the control unit determines appropriate display positions while scanning the display elements in the display unit, the control burden of the control unit can be reduced.
(12) In accordance with a preferred embodiment according to any one of the display systems mentioned above, the display device includes a memory unit configured to store a plurality of preset designs in each of which display positions of the display elements are adjusted in advance. The terminal control unit is configured to accept a user's selection of one of the preset designs and determine the display positions of the display elements on the display unit based on the one of the preset designs selected by the user. The display device control unit is configured to display the display elements on the display unit based on the display positions of the display elements determined by the terminal control unit. With this configuration, the display elements can be displayed in the display unit based on the preset designs according to the user's preference.
(13) In accordance with a preferred embodiment according to any one of the display systems mentioned above, the display system further comprises a terminal communicatively connected to the display device. The control unit includes a terminal control unit provided to the terminal. The terminal control unit is configured to accepts a user's selection of at least one of a configuration to display, based on distribution of luminance values, the display element with high priority in the high-luminance area of the display screen and the display element with low priority in the low-luminance area of the display screen, a configuration to display the display elements on the display unit based on display positions of the display elements accepted by the terminal, and a configuration to display the display elements on the display unit based on a preset design of the display positions of the display elements in which the display positions of the display elements are adjusted in advance. This allows the automatic arrangement based on the luminance distribution, the manual arrangement based on the distribution of luminance values by the user's terminal operation, and the arrangement based on the user's selection of the preset design. As a result, it is possible to easily select a method for displaying the display element with high priority in the high-luminance area according to the user's preference.
(14) In view of the state of the known technology, a device according to a second aspect of the present invention serves as the display device of any one of the display systems mentioned above, and comprises at least one light source, a display unit and a control unit. The display unit includes a display screen on which a plurality of display elements are configured to be displayed using light irradiated from the at least one light source. The control unit is configured to display, among the display elements, a display element with high priority for a user in a high-luminance area of the display screen of the display unit and configured to display, among the display elements, a display element with low priority for the user in a low-luminance area of the display screen of the display unit.
   With the display device according to the second aspect of the present invention, as described above, the control unit is configured to display, among the display elements, the display element with high priority for the user in the high-luminance area of the display screen of the display unit and configured to display, among the display elements, the display element with low priority for the user in the low-luminance area of the display screen of the display unit. With this configuration, even if the display unit has uneven luminance of the display screen, the display element with high priority for the user is displayed in the high-luminance area of the display screen. As a result, even when the display unit has uneven luminance, it is possible to provide the display device that can suppress a decrease in visibility of the display element with high priority for the user.
(15) In view of the state of the known technology, a display method according to a third aspect of the present invention comprises displaying, among a plurality of display elements, a display element with high priority for a user in a high-luminance area of a display screen of a display unit, and displaying, among the display elements, a display element with low priority for the user in a low-luminance area of the display screen of the display unit.
   The display method according to the third aspect of the present invention, as described above, comprises displaying, among the display elements, the display element with high priority for the user in the high-luminance area of the display screen of the display unit, and displaying, among the display elements, the display element with low priority for the user in the low-luminance area of the display screen of the display unit. With this configuration, even if the display unit has uneven luminance of the display screen, the display element with high priority for the user is displayed in the high-luminance area of the display screen. As a result, even when the display unit has uneven luminance, it is possible to provide the display method that can suppress a decrease in visibility of the display element with high priority for the user.
(16) In accordance with a preferred embodiment according to any one of the display systems mentioned above, the high-luminance area of the display screen has a higher luminance than that of the low-luminance area of the display screen.
(17) In accordance with a preferred embodiment according to any one of the display systems mentioned above, the high-luminance area of the display screen is located closer to the at least one light source than the low-luminance area of the display screen is.
(18) In accordance with a preferred embodiment according to any one of the display systems mentioned above, the display element with high priority has a higher priority than that of the display element with low priority.
(19) In accordance with a preferred embodiment according to any one of the display systems mentioned above, the priority is set by a user's terminal operation that rearranges items that are displayed on the terminal corresponding to the display elements, respectively, in order of priority for the user.
(20) In accordance with a preferred embodiment according to any one of the display systems mentioned above, the display positions of the display elements are set by a user's terminal operation that drags the display elements that are displayed on a preview screen on the terminal.

According to the present disclosure, as mentioned above, even when a display has uneven luminance, a decrease in visibility of a display element with high priority for a user can be suppressed.

### BRIEF DESCRIPTION OF THE DRAWINGS

Figure 1 is a block diagram of a display system according to a first embodiment.
Figure 2 is a schematic diagram of luminance distribution of a display screen of a display device of the display system according to the first embodiment.
Figure 3 is a schematic diagram showing display elements displayed on the display screen according to the first embodiment.
Figure 4 is a schematic diagram of a terminal of the display system according to the first embodiment, illustrating process of determining show/hide, priority and size of the display elements.
Figure 5 is a flow chart illustrating a control of a terminal control unit of the terminal in automatic arrangement according to the first embodiment.
Figure 6 is a flow chart illustrating a control of a display device control unit of the display device in the automatic arrangement according to the first embodiment.
Figures 7A, 7B and 7C are schematic diagrams illustrating scanning and resizing in the automatic arrangement of the display elements according to the first embodiment, with Figure 7A being a diagram illustrating an operation of scanning the display elements from a display element with high priority, Figure 7B being a diagram illustrating an operation of arranging a display element relative to a luminance area, and Figure 7C being a diagram illustrating an operation of resizing a display element relative to the luminance area.
Figures 8A and 8B are schematic diagrams illustrating a display on the terminal for manual arrangement and priority process according to a second embodiment, with Figure 8A being a diagram illustrating process of determining show/hide, priority and size according to the second embodiment, and Figure 8B being a diagram showing a state of luminance distribution and the display elements before changing the display positions of the display elements.
Figures 9A, 9B and 9C are schematic diagrams illustrating display examples of preset arrangements according to a third embodiment, with Figure 9A being a diagram showing a preset arrangement when two light sources are used, Figure 9B being a diagram showing a preset arrangement when three light sources are used, and Figure 9C being a diagram showing a preset selection screen.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims.

### FIRST EMBODIMENT

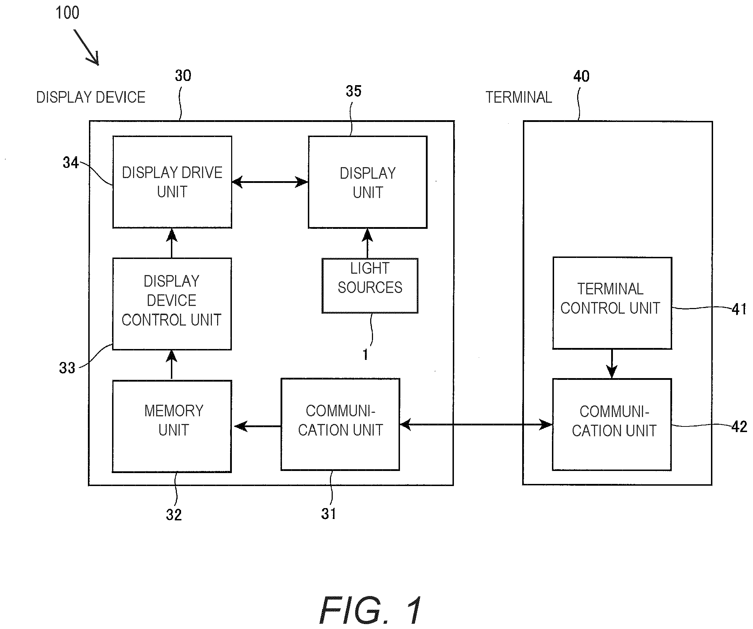

In a first embodiment, as shown in Figure 1, a display system 100 has a display device 30 and a terminal 40. The display device 30 is placed, for example, in a vehicle, such as an automobile.

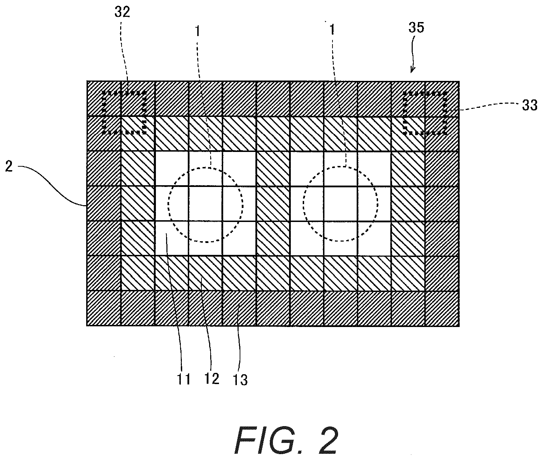

The display device 30 has a plurality of light sources 1, a display unit (or a display) 35, a communication unit (or a communicator) 31, a memory unit (or a computer memory) 32, a display device control unit (or a display device controller) 33 (e.g., a control unit), and a display drive unit (or a display driver) 34. The light sources 1 include, for example, light-emitting diodes (LEDs) or any other type of point light sources. The display unit 35 includes a display panel, such as a liquid crystal panel or any other type of display panel. The communication unit 31 includes a communication interface that is a hardware device capable of transmitting and/or receiving an analog or digital signal wirelessly via an antenna. Thus, in the illustrated embodiment, the communication unit 31 is a wireless communicator that includes a receiver, a transmitter, a transceiver, a transmitter-receiver, and contemplates any device or devices, separate or combined, capable of transmitting and/or receiving wireless communication signals. The wireless communication signals can be radio frequency (RF) signals having a frequency that is in a 2.4 GHz band or a 5.0 GHz band, ultra-wide band communication signals, or Bluetooth^{®} communications or any other type of signal suitable for short range wireless communications as understood in the display system field. In the illustrated embodiment, the communication unit 31 communicates with a communication unit (or a communicator) 42 of the terminal 40 using, for example, Bluetooth^{®} communications. The memory unit 32 is any computer storage device or any non-transitory computer-readable medium with the sole exception of a transitory, propagating signal. For example, the memory unit 32 can include nonvolatile memory and volatile memory, and can include a ROM (Read Only Memory) device, a RAM (Random Access Memory) device, a hard disk, a flash drive, etc. In the illustrated embodiment, the memory unit 32 stores the distribution of luminance values (see Figure 2) of the display unit 35 in advance. In particular, the distribution of luminance values of the display unit 35 is measured and/or determined for the display unit 35 at the provider or manufacturer of the display device 30 before it is shipped to an installation location, such as a user's place, for example. Of course, the distribution of luminance values of the display unit 35 that is measured and/or determined for the display unit 35 in advance can be stored in the memory unit 32 after the display device 30 is installed at the user's place. In any case, in the illustrated embodiment, the distribution of luminance values of the display unit 35 does not need to be measured at the user's place. However, the distribution of luminance values of the display unit 35 can be measured at the user's place. The display device control unit 33 includes a microcomputer or central processing unit (CPU). Thus, the display device control unit 33 is an electrical controller that is a hardware that executes a software program, and does not include a human. In the illustrated embodiment, the display device control unit 33 controls the display drive unit 34. The display drive unit 34 is a driver circuit that includes one or more ICs. The display drive unit 34 controls the display unit 35 based on commands from the display device control unit 33.

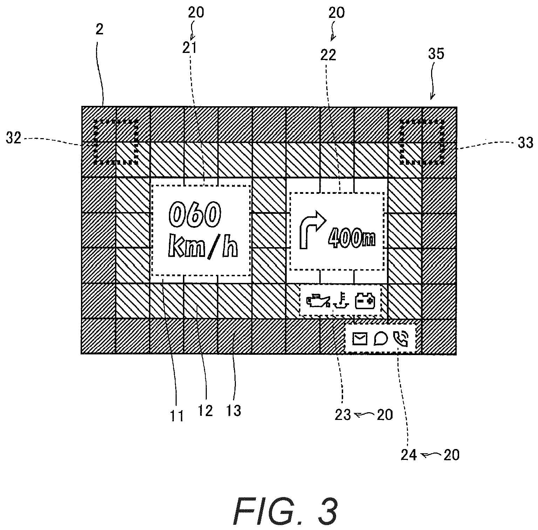

In the first embodiment, as shown in Figures 2 and 3, two light sources 1 are arranged opposite each other on the display unit 35. The two light sources 1 are, for example, horizontally spaced apart and arranged next to each other. In the illustrated embodiment, the light sources 1 emit light at approximately the maximum luminance of their capability (e.g., 95% or more of the maximum luminance). Thus, on a display screen 2 of the display unit 35, high-luminance areas 11 and low-luminance areas 13 that have a lower luminance than the high-luminance areas 11 occur. On the display screen 2 of the display unit 35, medium-luminance areas 12 having a luminance between the high-luminance areas 11 and the low-luminance areas 13 also occur due to uneven luminance. Among the display screen 2, the areas where the distance from the light sources 1 are relatively small become the high-luminance areas 11. The areas of the display screen 2 where the distance from the light sources 1 are relatively large become the low-luminance areas 13. Thus, in the illustrated embodiment, the high-luminance areas 11 are located closer to the light sources 1 than the low-luminance areas 13 are. A light guide plate or the like may be placed between the light sources 1 and the display unit 35. In the illustrated embodiment, the high-luminance areas 11 do not necessarily have uniform luminance at each location thereof, but have a higher luminance than a first predetermined luminance at each location thereof. Similarly, the medium-luminance areas 12 do not necessarily have uniform luminance at each location thereof, but have a lower luminance than the first predetermined luminance at each location thereof. The medium-luminance areas 12 also have a higher luminance than a second predetermined luminance at each location thereof that is lower than the first predetermined luminance. Similarly, the low-luminance areas 13 do not necessarily have uniform luminance at each location thereof, but have a lower luminance than the second predetermined luminance at each location thereof. The high-luminance areas 11, the medium-luminance areas 12 and the low-luminance areas 13 can be determined by the display device control unit 33 or a terminal control unit 41 of the terminal 40 based on the distribution of luminance values of the display unit 35 that is stored in the memory unit 32, using the first predetermined luminance and the second predetermined luminance, for example. Alternatively, the positions of the high-luminance areas 11, the medium-luminance areas 12 and the low-luminance areas 13 can be stored with the distribution of luminance values of the display unit 35 in the memory unit 32 in advance. In the illustrated embodiment, since the uneven luminance can occur on the display screen 2, light emissions of the light sources 1 do not need to be independently controlled from each other. Thus, the light emission control of the light sources 1 can be made easier.

As shown in Figure 3, display elements 20 are displayed on the display screen 2 of the display unit 35. The display elements 20 include, for example, a speed meter display 21 showing vehicle speed, a navigation display 22, a tell-tale display 23, and an incoming call notification display 24. The tell-tale display 23 includes an engine oil light, a water temperature gauge warning light, and a charging warning light. The incoming call notification display 24 includes e-mail and SMS notifications. The display elements 20 are formed by image data each having a background design element and a dynamic element that change based on the vehicle's status., for example.

As shown in Figure 1, the terminal 40 includes the terminal control unit 41 and the communication unit 42. The terminal control unit 41 includes a microcomputer or central processing unit (CPU). Thus, the terminal control unit 41 is an electrical controller that is a hardware that executes a software program, and does not include a human. In the illustrated embodiment, the terminal control unit 41 controls various components of the terminal 40. The communication unit 42 includes a communication interface that is a hardware device capable of transmitting and/or receiving an analog or digital signal wirelessly via an antenna. Thus, in the illustrated embodiment, the communication unit 42 is a wireless communicator that includes a receiver, a transmitter, a transceiver, a transmitter-receiver, and contemplates any device or devices, separate or combined, capable of transmitting and/or receiving wireless communication signals. The wireless communication signals can be radio frequency (RF) signals having a frequency that is in a 2.4 GHz band or a 5.0 GHz band, ultra-wide band communication signals, or Bluetooth^{®} communications or any other type of signal suitable for short range wireless communications as understood in the display system field. In the illustrated embodiment, the communication unit 42 communicates with the communication unit 31 of the display device 30 using, for example, Bluetooth^{®} communications.

Here, in the first embodiment, as shown in Figure 3, the display device control unit 33 is configured to perform a control in which the display elements 20 with high priority are displayed in the high-luminance areas 11 of the display screen 2 of the display unit 35 and the display elements 20 with low priority are displayed in the low-luminance areas 13 of the display screen 2 of the display unit 35 according to the priority of the display elements 20 set by the user among the plurality of the display elements 20. For example, the display device control unit 33 displays the speed meter display 21 and the navigation display 22 in the high-luminance areas 11 as the display elements 20 with high priority, and displays the incoming call notification display 24 in the low-luminance areas 13 as the display elements 20 with low priority. The display device control unit 33 also displays the tell-tale display 23 in the medium-luminance areas 12 as the display elements 20 with medium priority.

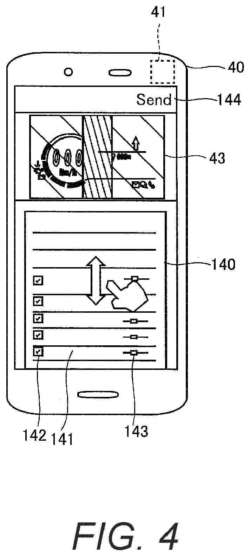

Specifically, the terminal control unit 41 is configured to determine the display positions of the display elements 20 on the display unit 35 based on the distribution of luminance values, so that the display elements 20 with high priority are displayed in the high-luminance areas 11 of the display screen 2 and the display elements 20 with low priority are displayed in the low-luminance areas 13 of the display screen 2. The display device control unit 33 is configured to display the display elements 20 on the display unit 35 based on the display positions of the display elements 20 determined by the terminal control unit 41. In detail, as shown in Figure 4, the terminal 40 accepts priority settings by the user. The terminal 40 is, for example, a smartphone. The terminal 40 displays a priority setting screen 140 for setting the priority of the display elements 20. The user operates the terminal 40 to rearrange items 141 that are displayed on the priority setting screen 140 for the display elements 20, respectively, in order of priority from the top, and then presses the Send button 144 to set the priority of the display elements 20.

In the first embodiment, as shown in Figure 4, the terminal control unit 41 can further be configured to determine the display positions of the display elements 20 on the display unit 35 so that the display elements 20 with high priority are displayed in the high-luminance areas 11 of the display screen 2 and the display elements 20 with low priority are displayed in the low-luminance areas 13 of the display screen 2 based not only on the priority set by the user and the distribution of luminance values, but also on the size of the display elements 20. Here, the size indicates how much of the area of the display elements 20 occupies in the area of the display screen 2. The size of the display elements 20 is determined or changed, for example, by the user moving sliders 143 of the items 141 that are displayed on the terminal 40 for the display elements 20, respectively, left or right, and then pressing the Send button 144. Furthermore, the terminal control unit 41 accepts the user's operation of inputting the setting of information on whether to show or hide the display elements 20 by means of check boxes 142 of the items 141 that are displayed on the terminal 40 for the display elements 20, respectively.

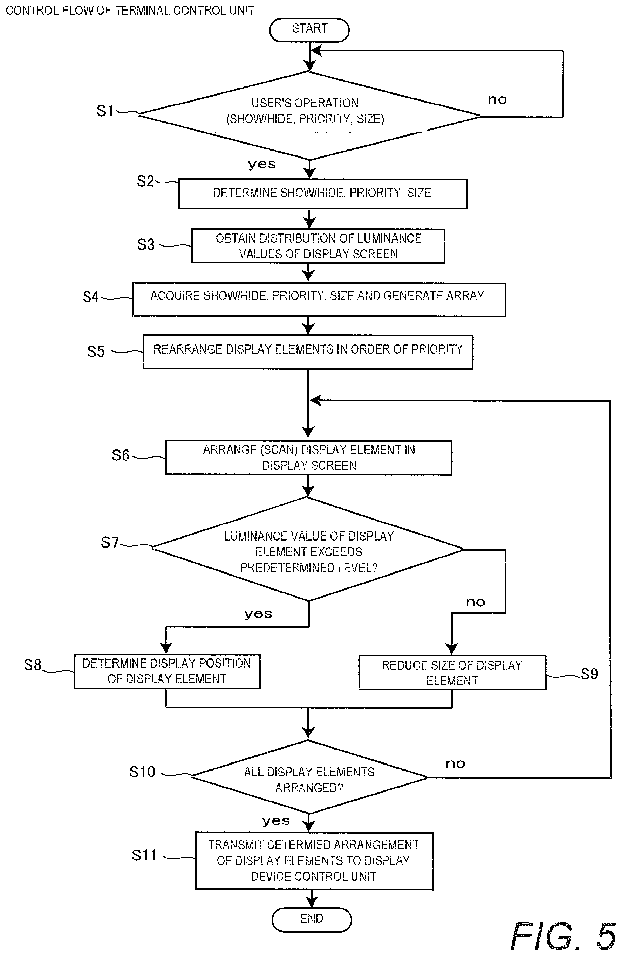

Referring to Figure 5, the operation of determining the display positions of the display elements 20 performed by the terminal control unit 41 is described below.

In step S1, the terminal control unit 41 determines whether information of the display elements 20 has been determined or set. The terminal control unit 41 determines that the information of the display elements 20 has been set in response to the user pressing the Send button 144 after setting the information on whether to show or hide the display elements 20, the priority of the display elements 20, and the size of the display elements 20 using terminal 40.

If yes in step S1, proceed to step S2, where the terminal control unit 41 determines the information on whether to show or hide the display elements 20, the priority of the display elements 20, and the size of the display elements 20.

If no in step S1, the operation of step S1 is repeated until the operation by the user is accepted.

In step S3, the terminal control unit 41 obtains the distribution of luminance values from the memory unit 32 of the display device 30.

In step S4, the terminal control unit 41 acquires the information on whether to show or hide the display elements 20, the priority of the display elements 20, and the size of the display elements 20 that have been set by the user. The terminal control unit 41 also generates an array mapping the information on whether to show or hide the display elements 20, the priority of the display elements 20, and the size of the display elements 20 in association with the display elements 20, respectively.

In step S5, the terminal control unit 41 rearranges the array of display elements 20 set to be shown among the display elements 20 in order of the priority of these display elements 20. Hereinafter, the display elements 20 set to be shown are merely referred to as the display elements 20.

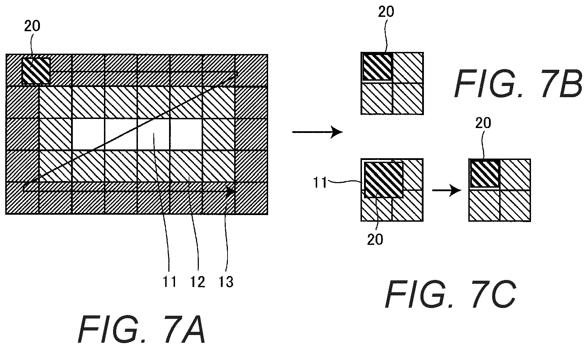

In step S6, the terminal control unit 41 scans the display elements 20 in the display screen 2 to determine the display positions of the display elements 20 in the display screen 2. Specifically, as shown in Figure 7A, the display elements 20 are scanned in the display screen 2 from a display element 20 with the highest priority. For example, the terminal control unit 41 first changes a position of the display element 20 with the highest priority in the display screen 2 until a predetermined condition described later is satisfied in order to place the display element 20 with the highest priority in the high-luminance areas 11 as shown in Figure 7B.

Specifically, in step S7, the terminal control unit 41 determines whether the luminance value of the display element 20 with the highest priority in the display screen 2 exceeds a predetermined level (predetermined luminance level) at each position while changing the position of the display element 20 with the highest priority in the display screen 2. For example, the terminal control unit 41 determines whether the entire area (size) of the display element 20 with the highest priority is placed in the high-luminance areas 11. In this case, the terminal control unit 41 can determine whether or not an area (size) that exceeds a predetermined percentage of the entire area (size) of the display element 20 with the highest priority is placed in the high-luminance areas 11.

If yes in step S7, proceed to step S8, where the terminal control unit 41 determines the display position of the display element 20 with the highest priority. In particular, the terminal control unit 41 determines that the display position of the display element 20 with the highest priority is set as shown in Figure 7B.

If no in step S7, proceed to step S9, where the terminal control unit 41 reduces the size of the display element 20 with the highest priority, as shown in Figure 7C. In this case, the terminal control unit 41 reduces the size of the display element 20 with the highest priority by a predetermined rate, for example.

In step S10, the terminal control unit 41 determines whether the arrangement of all display elements 20 has been completed. If no in step S10, the terminal control unit 41 returns to step S6 and repeats the process for a different display element 20 with the next highest priority (if yes in step S7) or for the display element 20 whose size has been reduced in step S9. If yes in step S10, in step S11, the determined arrangement of the display elements 20 (i.e., the display positions of the display elements 20 in the display screen 2) is transmitted to the display device control unit 33, and the control of the terminal control unit 41 ends.

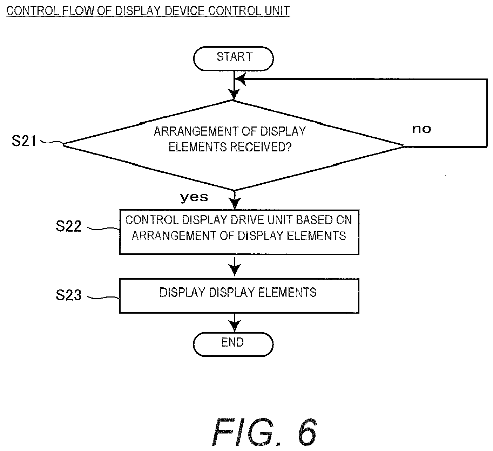

Referring now to Figure 6, the operation of displaying the display elements 20 performed by the display device control unit 33 is described below.

In step S21, the display device control unit 33 determines whether or not the arrangement of the display elements 20 has been received.

If yes in step S21, proceed to step S22, where the display device control unit 33 controls the display drive unit 34 based on the arrangement of the display elements 20.

If no in step S21, the operation of step S21 is repeated until the arrangement of the display elements 20 is received.

In step S23, the display elements 20 are displayed on the display screen 2 based on the arrangement of the display elements 20, and the control of the display device control unit 33 ends.

### (Effects of First Embodiment)

The first embodiment has the following effects.

In the first embodiment, as described above, the display device control unit 33 is configured to display, among the display elements 20, the display elements 20 with high priority for the user in the high-luminance areas 11 of the display screen 2 of display unit 35, and configured to display, among the display elements 20, the display elements 20 with low priority for the user in the low-luminance areas 13 of the display screen 2 of display unit 35. With this configuration, even when the display unit 35 has uneven luminance of the display screen 2, the display elements 20 with high priority for the user are displayed in the high-luminance areas 11 of the display screen 2. As a result, even when the display unit 35 has uneven luminance, the decrease in visibility of the display elements 20 with high priority for the user can be suppressed.

In the first embodiment, as described above, the plurality of the light sources 1 are provided. The display device control unit 33 is configured to display, among the display elements 20, the display elements 20 with high priority for the user in the high-luminance areas 11 of the display screen 2 of the display unit 35, and configured to display, among the display elements 20, the display elements 20 with low priority for the user in the low-luminance areas 13 of the display screen 2 of the display unit 35 in a state in which luminance of the display screen 2 is not equalized. With this configuration, even when the plurality of the light sources 1 are provided, the display elements 20 with high priority for the user can be arranged in the high-luminance areas 11 of the display screen 2 and the display elements 20 with low priority for the user can be arranged in the low-luminance areas 13 of the display screen 2. As a result, even in a state in which the luminance of the display screen 2 is not equalized due to the plurality of the light sources 1, the decrease in visibility of the display elements 20 with high priority for the user can be suppressed.

In the first embodiment, as described above, the terminal 40 that is communicatively connected to the display device 30 is further provided. The control unit includes the terminal control unit 41 provided to the terminal 40 and the display device control unit 33 provided to the display device 30. The terminal control unit 41 is configured to determine the display positions of the display elements 20 on the display unit 35 based on the distribution of luminance values such that the display elements 20 with high priority are displayed in the high-luminance areas 11 of the display screen 2 and the display elements 20 with low priority are displayed in the low-luminance areas 13 of the display screen 2. The display device control unit 33 is configured to display the display elements 20 on the display unit 35 based on the display positions of the display elements 20 determined by the terminal control unit 41. With this configuration, the terminal control unit 41 determines the display positions of the display elements 20 based on the luminance distribution and the display device control unit 33 displays the display elements 20 on the display unit 35. Thus, the display elements 20 with high priority are automatically displayed in the high-luminance areas 11 of display screen 2. As a result, the user's effort to display the display elements 20 with high priority in the high-luminance areas 11 of the display screen 2 can be eliminated.

In the first embodiment, as described above, the terminal 40 is configured to accept the user's setting of priority. The terminal control unit 41 is configured to determine the display positions of the display elements 20 on the display unit 35 based on the priority set by the user and the distribution of the luminance values such that the display elements 20 with high priority are displayed in the high-luminance areas 11 of display screen 2 and the display elements 20 with low priority are displayed in the low-luminance areas 13 of the display screen 2 . With this configuration, the display positions of the display elements 20 on the display unit 35 are determined based on the priority set by the user, and the display elements 20 are displayed on the display unit 35. Thus, the display elements 20 can be displayed in the high-luminance areas 11 of the display screen 2 and the low-luminance areas 13 of the display screen 2 according to the user's intended priority.

In the first embodiment, as described above, the terminal control unit 41 is configured to determine the display positions of the display elements 20 on the display unit 35 based on the size of the display elements 20, in addition to the priority set by the user and the distribution of luminance values, such that the display elements 20 with high priority are displayed in the high-luminance areas 11 of the display screen 2 and the display elements 20 with low priority are displayed in the low-luminance areas 13 of the display screen 2. With this configuration, the display elements 20 with high priority can be displayed in the high-luminance areas 11 of the display screen 2 based also on the size of the display elements 20. Thus, it is possible to prevent the display elements 20 with high priority from being displayed so that they protrude out from the high-luminance areas 11. As a result, the decrease in visibility of the display elements 20 with high priority can be suppressed.

### SECOND EMBODIMENT

Next, a second embodiment will be described. In the second embodiment, the display positions of the display elements 20 are set by the user.

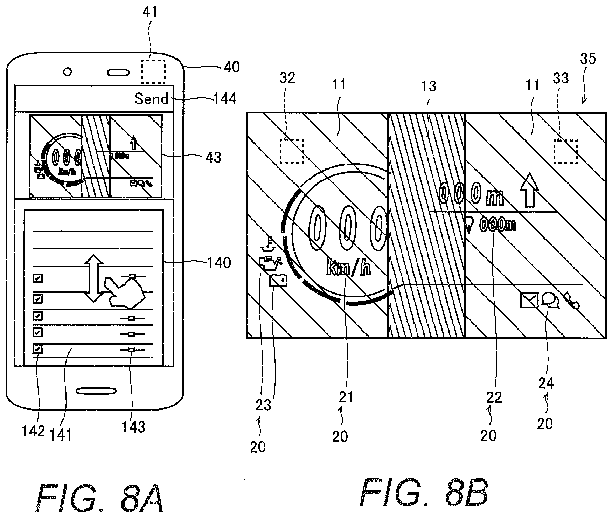

In the second embodiment, as shown in Figure 8A, the terminal control unit 41 is configured to accept a user's setting of the display positions of the display elements 20 on the display unit 35. The display device control unit 33 is configured to display the display elements 20 on the display unit 35 based on the display positions of the display elements 20 accepted by the terminal control unit 41. Specifically, the display positions of the display elements 20 are set or determined by the user dragging the display elements 20 on a preview screen 43 displayed on the terminal 40, as shown in Figure 8A.

In the second embodiment, as shown in Figure 8A, the terminal control unit 41 also accepts the user's terminal operation to set information on whether to show or hide each of the display elements 20 and to set the size of the display elements 20, in addition to accepting the user's terminal operation to set the display positions of the display elements 20. The setting of the information on whether to show or hide the display elements 20 is made using the check box 142 in the edit menu, as explained in the first embodiment. The terminal control unit 41 displays the display elements 20 on the display unit 35 by overlapping the display elements 20 with the distribution of luminance values, as shown in Figure 8B. In the illustrated embodiment, the distribution of luminance values is shown by showing the high-luminance areas 11 and the low-luminance areas 13 in different manners, such as different hatchings, as shown in Figure 8B. However, the display of the distribution of luminance values is not limited to this. The distribution of luminance values can be shown by showing gradations of background colors, for example.

### (Effect of Second Embodiment)

The second embodiment has the following effects.

In this embodiment, as described above, the terminal 40 communicatively connected to the display device 30 is further provided. The control unit includes the terminal control unit 41 provided to the terminal 40 and the display device control unit 33 provided to the display device 30. The terminal control unit 41 is configured to accept the user's setting of the display positions of the display elements 20 on the display unit 35. The display device control unit 33 is configured to display the display elements 20 on the display unit 35 based on the display positions of the display elements 20 accepted by the terminal control unit 41. With this configuration, it is possible to arrange the display elements 20 on the display unit 35 according to the user's preferences indicated by the user's terminal operation. As a result, the visibility of the display elements 20 can be improved by manual arrangement by the user's terminal operation.

In this embodiment, as described above, the terminal control unit 41 is configured to accept the user's selection of showing and hiding of each of the display elements 20, the user's setting of the size of the display elements 20 and the user's setting of the display positions of the display elements 20 according to the user's operation. The terminal control unit is configured to display the display elements 20 on the display unit 35 by overlapping the display elements 20 with the distribution of luminance values according to the user's setting of the display positions of the display elements 20. With this configuration, the user can perform the arrangement of the display elements 20, the selection of showing or hiding the display elements and the setting of the size of the display elements 20 in a state in which the luminance distribution is overlapped with the display elements 20. As a result, it is possible to suppress the divergence between the state of the display elements 20 arranged on the display unit 35 as assumed by the user and the state of the display elements 20 actually arranged on the display unit 35.

### THIRD EMBODIMENT

Next, a third embodiment will be described. In the third embodiment, the display elements 20 are displayed on the display unit 35 based on a preset design 70 in which the display positions of the display elements 20 are adjusted or determined in advance.

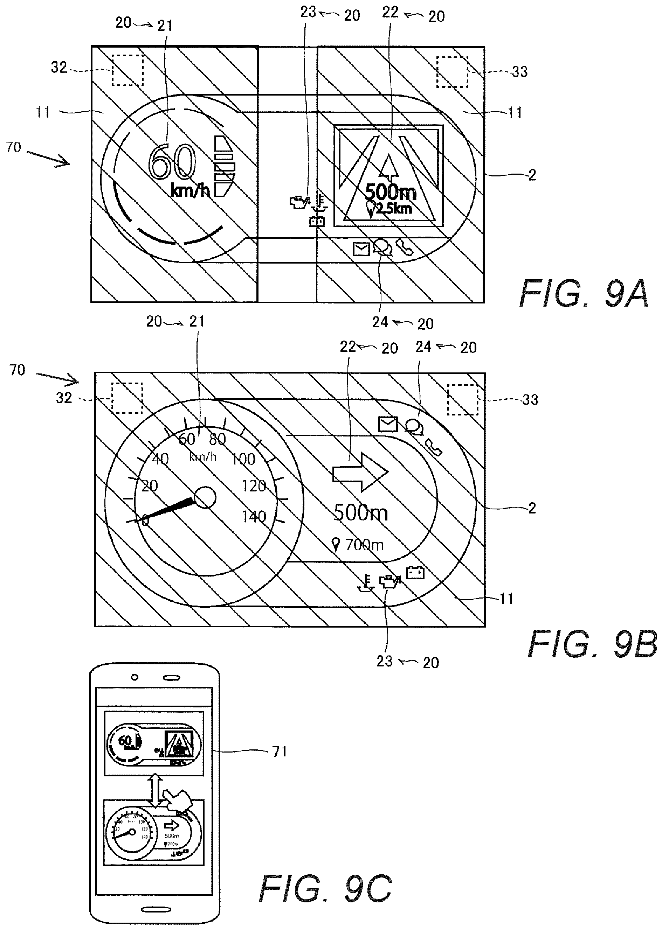

In the third embodiment, as shown in Figures 9A and 9B, preset designs 70 in each of which the display positions of the display elements 20 are adjusted in advance are stored in the memory unit 32. The preset designs 70 are configured so that the display elements 20 with high priority are displayed in the high-luminance areas 11 of the display screen 2 and the display elements 20 with low priority are displayed in the low-luminance areas 13 of the display screen 2. The terminal control unit 41 and the display device control unit 33 (e.g., control unit) are configured to display the display elements 20 on the display unit 35 based on the preset designs 70. The preset designs 70 may be different designs for cases where there are one or two light sources 1 or there are three or more light sources 1.

In the third embodiment, as shown in Figure 9C, the terminal 40 accepts the user's selection of one of the preset designs 70. The terminal control unit 41 determines the display positions of the display elements 20 in the display unit 35 based on the preset design 70 selected by the user. The display device control unit 33 is configured to display the display elements 20 in the display unit 35 based on the display positions of the display elements 20 determined by the terminal control unit 41. The preset designs 70 can be selected from a preset screen list 71 shown in Figure 9C displayed on the terminal 40.

### (Effect of Third Embodiment)

The third embodiment has the following effects.

In this embodiment, as described above, the display unit 30 has the memory unit 32 configured to store the preset designs 70 in which the display positions of the display elements 20 are adjusted in advance. The control unit (the terminal control unit 41 and the display device control unit 33) is configured to display the display elements 20 on the display unit 35 based on the preset designs 70 such that the display elements 20 with high priority are displayed in the high-luminance areas 11 of the display screen 2 and the display elements 20 with low priority are displayed in the low-luminance areas 13. With this configuration, the control unit displays the display elements 20 on the display unit 35 based on the preset designs 70 stored in the memory unit 32 in advance. Thus, unlike the case where the control unit determines appropriate display positions while scanning the display elements 20 in the display unit 35, the control burden of the control unit can be reduced.

In this embodiment, as described above, the terminal control unit 41 is configured to accept the user's selection of one of the preset designs 70 and determine the display positions of the display elements 20 on the display unit 35 based on the preset design 70 selected by the user. The display device control unit 33 is configured to display the display elements 20 on the display unit 35 based on the display positions of the display elements 20 determined by the terminal control unit 41. With this configuration, the display elements 20 can be displayed in the display unit 35 based on the preset designs 70 according to the user's preference.

### MODIFICATION

The embodiments disclosed herein are just examples in every respect, and should not be interpreted as being limiting in nature. The scope of the invention is defined by the claims rather than by the above description of the embodiments, while all modifications (modification examples) within the meaning and range of the claims are included in the scope of the invention.

In the first to third embodiments above, an example is shown in which an LED (point light source) is used as the light sources 1, but the present invention is not limited to this. In the present invention, a linear light source other than LED may be used as the light sources 1.

In the first to third embodiments above, an example is shown in which an LED (point light source) is used as the light sources 1 and the light sources 1 are disposed below the display unit 35, but the present invention is not limited to this. The light sources 1 can be disposed on the side of the display unit 35 to illuminate the display screen 2 through a light guide plate.

In the first embodiment above, an example is shown in which the terminal 40 sets the display positions of the display elements 20, the priority of the display elements 20, the size of the display elements 20 and the selection of showing or hiding the display elements 20, but the present invention is not limited to this. In the present invention, the display device 30 can set the positions, the priority, the size and the selection of showing or hiding the display elements 20.

In the first to third embodiments above, an example is shown in which the distribution of luminance values of the display unit 35 is stored in the memory unit 32 of the display unit 30, but the present invention is not limited to this. The distribution of luminance values of the display unit 35 can be stored in an external storage device.

In the first to third embodiments above, the automatic arrangement of the display elements 20 (the first embodiment), the setting of the display positions of the display elements 20 by the user (the second embodiment), and the arrangement of the display positions based on the preset designs 70 (the third embodiment), respectively, are described as separate embodiments, but the present invention is not limited to this. The present invention may be configured to allow selection of these embodiments. That is, the terminal control unit 41 is configured to accept a user's selection of at least one of a configuration to display, based on the distribution of luminance values stored in the memory unit 32, the display elements 20 with high priority in the high-luminance areas 11 of the display unit 35 and the display elements 20 with low priority in the low-luminance areas 13 of the display unit 35, a configuration to display the display elements 20 on the display unit 35 based on the display positions of the display elements 20 accepted by the terminal 40, and a configuration to display the display elements 20 on the display unit 35 based on the preset designs 70 of the display positions of the display elements 20 in which the display positions of the display elements 20 are adjusted in advance such that the display elements 20 with high priority are displayed in the high-luminance areas 11 of the display unit 35 and the display elements 20 with low priority are displayed in the low-luminance areas 13 of the display unit35. The input of the user's selection of at least one of the configurations is accepted, for example, by the terminal 40. This allows the automatic arrangement based on the luminance distribution, the manual arrangement based on the distribution of luminance values by the user's terminal operation, and the arrangement based on the user's selection of the preset designs 70. As a result, it is possible to easily select a method for displaying the display elements 20 with high priority in the high-luminance areas 11 according to the user's preference.

In the second embodiment above, an example is shown in which the display elements 20 are displayed based on the user's setting of the display positions of the display elements 20, but the present invention is not limited to this. For example, a learning function that learns the user's preferences may be provided in the memory unit 32. The display elements 20 can then be displayed so that it corresponds to the display positions based on the user's preferences learned by the learning function.

In the first embodiment above, an example is shown in which the size of the display elements 20 is reduced until the arrangement of the display elements 20 is determined, but the present invention is not limited to this. At the time of determining the arrangement of the display elements 20, the size of the display elements 20 may be enlarged so that the display elements 20 are displayed in the high-luminance areas 11 with its size enlarged to the greatest extent.

In the first embodiment above, an example is shown in which the size of the display elements 20 is reduced until the arrangement of the display elements 20 is determined, but the present invention is not limited to this. A threshold value may be set as a lower limit for the reduction of the size of the display elements 20.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a display device in an upright position on a horizontal surface. Accordingly, these directional terms, as utilized to describe the display device should be interpreted relative to a display device on a horizontal surface. The terms "left" and "right" are used to indicate the "right" when referencing from the right side as viewed from the rear side of the display device, and the "left" when referencing from the left side as viewed from the rear side of the display device.

The phrase "at least one of" as used in the present invention means "one or more" of a desired choice. For one example, the phrase "at least one of" as used in the present invention means "only one single choice" or "both of two choices" if the number of its choices is two. For another example, the phrase "at least one of" as used in the present invention means "only one single choice" or "any combination of equal to or more than two choices" if the number of its choices is equal to or more than three. Also, the term "and/or" as used in the present invention means "either one or both of".

The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

## Claims

1. A display system comprising:
a display device including at least one light source and a display unit with a display screen on which a plurality of display elements are to be displayed using light irradiated from the at least one light source; and
a control unit configured to display, among the display elements, a display element with high priority for a user in a high-luminance area of the display screen of the display unit and configured to display, among the display elements, a display element with low priority for the user in a low-luminance area of the display screen of the display unit.

2. The display system according to claim 1, wherein
the at least one light source includes a plurality of light sources.

3. The display system according to claim 1 or 2, wherein
the control unit is configured to display, among the display elements, the display element with high priority for the user in the high-luminance area of the display screen of the display unit and configured to display, among the display elements, the display element with low priority for the user in the low-luminance area of the display screen of the display unit in a state in which luminance of the display screen is not equalized.

4. The display system according to any one of claims 1 to 3, further comprising
a terminal communicatively connected to the display device.

5. The display system according to claim 4, wherein
the control unit includes
a terminal control unit provided to the terminal, and
a display device control unit provided to the display device.

6. The display system according to claim 5, wherein
the terminal control unit is configured to determine display positions of the display elements on the display unit based on distribution of luminance values such that the display element with high priority is displayed in the high-luminance area of the display screen and the display element with low priority is displayed in the low-luminance area of the display screen, and
the display device control unit is configured to display the display elements on the display unit based on the display positions of the display elements determined by the terminal control unit.

7. The display system according to claim 5 or 6, wherein
the terminal is configured to accept a user's setting of priority, and
the terminal control unit is configured to determine the display positions of the display elements on the display unit based on the priority set by the user and the distribution of the luminance values such that the display element with high priority is displayed in the high-luminance area of the display screen and the display element with low priority is displayed in the low-luminance area of the display screen.

8. The display system according to claim 7, wherein
the terminal control unit is configured to determine the display positions of the display elements on the display unit based on size of the display elements, in addition to the priority set by the user and the distribution of the luminance values, such that the display element with high priority is displayed in the high-luminance area of the display screen and the display element with low priority is displayed in the low-luminance area of the display screen.

9. The display system according to any one of claims 5 to 8, wherein
the terminal control unit is configured to accept a user's setting of display positions of the display elements on the display unit, and
the display device control unit is configured to display the display elements on the display unit based on the display positions of the display elements accepted by the terminal control unit.

10. The display system according to claim 9, wherein
the terminal control unit is configured to accepts a user's selection of showing and hiding of each of the display elements, a user's setting of size of the display elements and the user's setting of the display positions of the display elements according to user's operation, and
the terminal control unit is configured to display the display elements on the display unit by overlapping the display elements with distribution of luminance values according to the user's setting of the display positions of the display elements.

11. The display system according to any one of claims 1 to 10, wherein
the display device includes a memory unit configured to store at least one preset design in which display positions of the display elements are adjusted in advance, and
the control unit is configured to display the display elements on the display unit based on the at least one preset design such that the display element with high priority is displayed in the high-luminance area of the display screen and the display element with low priority is displayed in the low-luminance area of the display screen.

12. The display system according to any one of claims 5 to 10, wherein
the display device includes a memory unit configured to store a plurality of preset designs in each of which display positions of the display elements are adjusted in advance,
the terminal control unit is configured to accept a user's selection of one of the preset designs and determine the display positions of the display elements on the display unit based on the one of the preset designs selected by the user, and
the display device control unit is configured to display the display elements on the display unit based on the display positions of the display elements determined by the terminal control unit.

13. The display system according to any one of claims 1 to 12, further comprising
a terminal communicatively connected to the display device, wherein
the control unit includes a terminal control unit provided to the terminal, and
the terminal control unit is configured to accept a user's selection of at least one of
a configuration to display, based on distribution of luminance values, the display element with high priority in the high-luminance area of the display screen and the display element with low priority in the low-luminance area of the display screen,
a configuration to display the display elements on the display unit based on display positions of the display elements accepted by the terminal, and
a configuration to display the display elements on the display unit based on a preset design of the display positions of the display elements in which the display positions of the display elements are adjusted in advance.

14. A device serves as the display device of any one of the display systems according to claims 1 to 13, comprising:
at least one light source;
a display unit with a display screen on which a plurality of display elements are to be displayed using light irradiated from the at least one light source; and
a control unit configured to display, among the display elements, a display element with high priority for a user in a high-luminance area of the display screen of the display unit and configured to display, among the display elements, a display element with low priority for the user in a low-luminance area of the display screen of the display unit.

15. A display method comprising:
displaying, among a plurality of display elements, a display element with high priority for a user in a high-luminance area of a display screen of a display unit; and
displaying, among the display elements, a display element with low priority for the user in a low-luminance area of the display screen of the display unit.
